# EUROPÄISCHE PATENTSCHRIFT

(11) **EP 2 875 858 B1**
(45) Veröffentlichungstag und Bekanntmachung des Hinweises auf die Patenterteilung: **16.03.2016**
(21) Anmeldenummer: 14003256.6
(22) Anmeldetag: 19.09.2014
(51) Int. Cl.: B01J 20/26, C04B 38/04, B01J 20/28

(54) **VERFAHREN ZUR HERSTELLUNG PORÖSER SINTERKÖRPER**
METHOD FOR PRODUCING POROUS SINTERED BODIES
PROCÉDÉ DE FABRICATION DE CORPS FRITTÉ POREUX

(30) Priorität: 21.11.2013 DE 102013019582
(43) Veröffentlichungstag der Anmeldung: 27.05.2015
(73) Patentinhaber: Karlsruher Institut für Technologie, 76131 Karlsruhe (DE)
(72) Erfinder: Willenbacher, Norbert, 67292 Kirchheimbolanden (DE); Dittmann, Jens, 76227 Karlsruhe (DE)
(74) Vertreter: Müller-Boré & Partner Patentanwälte PartG mbB

(56) Entgegenhaltungen:
- EP-A1- 2 143 696
- WO-A1-02/081403
- CN-B- 102 424 569
- DE-B3-102011 106 834
- US-A1- 2007 119 135
- AKARTUNA I ET AL: "Macroporous Ceramics from Particle-stabilized Emulsions", ADVANCED MATERIALS, WILEY - V C H VERLAG GMBH & CO. KGAA, DE, Bd. 20, Nr. 24, 20. Oktober 2008 (2008-10-20), Seiten 4714-4718, XP002598181, ISSN: 0935-9648, DOI: 10.1002/ADMA.200801888
- JENS DITTMANN ET AL: "Ceramic Capillary Suspensions: Novel Processing Route for Macroporous Ceramic Materials", JOURNAL OF THE AMERICAN CERAMIC SOCIETY, 1. Dezember 2012 (2012-12-01), Seiten n/a-n/a, XP055176724, ISSN: 0002-7820, DOI: 10.1111/jace.12126
- E. KOOS ET AL: "Capillary Forces in Suspension Rheology", SCIENCE, Bd. 331, Nr. 6019, 18. Februar 2011 (2011-02-18), Seiten 897-900, XP055037557, ISSN: 0036-8075, DOI: 10.1126/science.1199243
- AKARTUNA I ET AL: "Macroporous polymers from particle-stabilized emulsions", POLYMER, ELSEVIER SCIENCE PUBLISHERS B.V, GB, Bd. 50, Nr. 15, 17. Juli 2009 (2009-07-17) , Seiten 3645-3651, XP026319848, ISSN: 0032-3861, DOI: 10.1016/J.POLYMER.2009.05.023 [gefunden am 2009-05-22]

## Beschreibung

Die vorliegende Erfindung betrifft ein Verfahren zur Herstellung poröser Sinterkörper durch Herstellung nach dem Kapillarsuspensionsverfahren unter Verwendung bi- oder multimodaler Partikelgrößenverteilungen.

Poröse Sinterwerkstoffe werden in unterschiedlichsten Anwendungen eingesetzt. So finden diese beispielsweise als Filter in der Abgas- bzw. Abwasseraufbereitung oder Katalysatorträger bei chemischen Prozessen bis hin zur Medizintechnik als Scaffold Anwendung.

Im Rahmen der aufgezeigten Anwendungsbeispiele ist die mechanische Festigkeit der jeweiligen Bauteile von entscheidender Bedeutung, da diese im Anwendungsumfeld nicht unerheblich sind. Es ist somit von entscheidender Bedeutung, neben der Optimierung von Porositäts- und Porengrößenbereichen auch die mechanische Bauteilfestigkeit zu erhöhen. Hierbei ist vor allem die Homogenität des Werkstoffgefüges von entscheidender Bedeutung. Materialentmischungen und Inselbildung gilt es zu vermeiden.

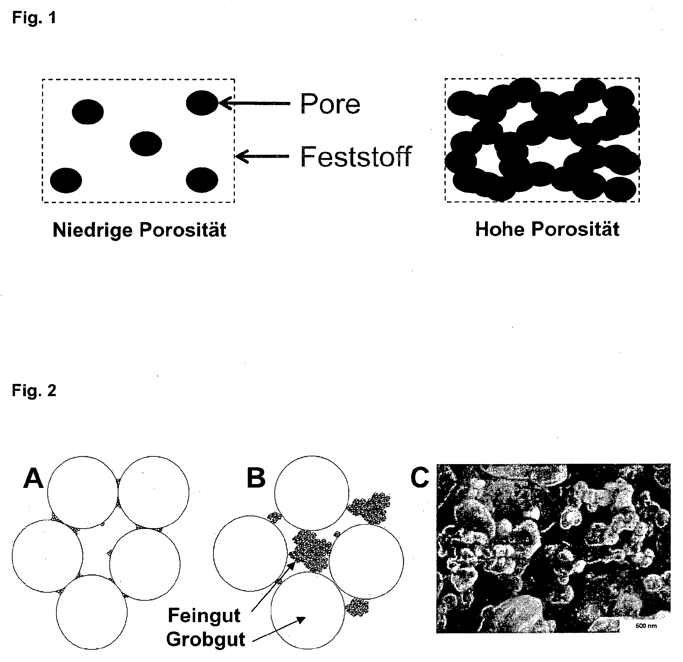

Im Stand der Technik ist es bekannt, dass die Festigkeit hochporöser Sinterteile außer vom verwendeten Material überwiegend von der eingestellten Porosität abhängig ist; vgl. (i) M. Scheffler, P. Colombo, "Cellular Ceramics", ISBN 3527313206, Wiley-VCH Verlag GmbH & Co. KGaA, 1. Auflage (2005); (ii) Y. B. P. Kwan, "The porosity dependence of flexural modulus and strength for capsule-free hot isostatically pressed porous alumina", J. Mat. Sc., 35 (2000) 1205-1211, bzw. S.C. Nanjangud, R. Brezny, D.J. Green, "Strength and Young's Modulus Behavior of a Partially Sintered Porous Alumina", J. Am. Ceram. S., 78 [1] 266-68 (1995). Eine Erhöhung der Porosität im Sinterteil führt in der Regel zu einer Erniedrigung der Bauteilfestigkeit. Dies ist darauf zurückzuführen, dass bei niedrigen Porositäten der Feststoff die kontinuierliche Phase darstellt und das Porenvolumen lediglich vereinzelt als Pore auftritt (s. Figur 1); vgl. L.F. Nielsen,"Elasticity and Damping of Porous Materials and Impregnated Materials", J. Am. Ceram. S., 67 [2] 93-98 (1984).

Bei einer Erhöhung der Porosität kehrt sich dieser Sachverhalt jedoch um. Das Porenvolumen stellt nun zum Großteil die kontinuierliche Phase dar und die feste Phase wird zum Großteil vereinzelt. In "Processing Routes to Macroporous Ceramics: A Review", Andre R. Studart, Urs T. Gonzenbach, Elena Tervoort, Ludwig J. Gauckler), J. Am. Ceram. S., 89 [6] 1771-1789 (2006), findet sich dieser Sachverhalt konkretisiert. Darin wird ausgeführt und durch entsprechende Daten bzw. Figuren belegt, dass zunehmende Porositäten zu deutlich niedrigeren Bauteilfestigkeiten führen. Die Effektivität eines Herstellungsverfahrens hinsichtlich der resultierenden mechanischen Bauteileigenschaften muss daher immer bei konstanter Porosität verglichen werden. Nur dann wird ersichtlich, ob ein neues Verfahren zu einer Festigkeitssteigerung im Sinterteil beiträgt.

Im Wesentlichen kann durch die Wahl des Werkstoffes sowie die eingestellte Porengeometrie Einfluss auf die Festigkeit genommen werden. Dies ist in der Praxis jedoch nicht immer realisierbar, da verschiedene Anwendungen an bestimmte Werkstoffe gekoppelt sind und somit das komplette Ersetzen eines Werkstoffes durch einen anderen nicht immer durchgeführt werden kann. Des Weiteren können je nach Wahl des Werkstoffes erhebliche Mehrkosten beim Rohmaterial bzw. durch die Prozessierung der jeweiligen Materialien entstehen.

Bei der Wahl der Porengeometrie hinsichtlich optimaler mechanischer Eigenschaften werden im Stand der Technik möglichst runde Poren empfohlen. Dies liegt daran, dass hier im Vergleich zu scharfkantigen Poren keine Kerbwirkung besteht und somit unter Belastung Rissbildung besser vermieden wird. Es ist jedoch nicht immer möglich, die Porengeometrie wie gewünscht zu beeinflussen. Porengeometrien sind oft an ein bestimmtes Herstellungsverfahren gekoppelt. Wie aus dem vorstehend zitierten Stand der Technik ersichtlich ist, sind die jeweiligen Verfahren jedoch wiederum an einen festen Bereich beim Verhältnis Porosität / Porengröße gebunden, was die Anwendung der jeweiligen Verfahren limitiert.

Des Weiteren wurde im Stand der Technik eine Methode offenbart, bei der von mehrmodalen Partikelmischungen ausgegangen wird; vgl. F. Buse, "Neuartige poröse α-Al2O3-Werkstoffe und -Membranen", Dissertation Westfälische Wilhelms-Universität Münster (2002). Es wurde hierbei versucht, die Grobgutfraktion mit der Feingutfraktion zu stabilisieren, wobei das Feinkorn als "Stützkorn" des Grobgutes fungiert, was in Figur 2A schematisch dargestellt ist. Das Feinkorn liegt hierbei in den Zwickeln bzw. Kontaktstellen des Grobgutes vor. Die Feingutfraktion soll so das Grobgut beim Sintervorgang "verschweißen" und zu einer besseren Ausbildung von Sinterhälsen führen, woraus steigende Festigkeiten resultieren sollen. Hierbei war das Ziel, die in Figur 2A dargestellte Idealstruktur einzustellen, was jedoch nicht realisiert werden konnte. Die gefundene Struktur ist in Figur 2B und Figur 2C dargestellt. Es hat sich herausgestellt, dass das Feinkorn vor allem in Form von Agglomeraten neben der Grobgutfraktion auftritt, was aus Figur 2C eindeutig ersichtlich wird.

DE 10 2011 106 834 offenbart ein neuartiges Verfahren zur Herstellung makroporöser Keramiken nach dem Kapillarsuspensionsverfahren, woraus hochporöse Keramiken mit offenen, durchgängigen Porositäten resultieren.

Somit liegt der vorliegenden Erfindung die Aufgabe zugrunde, ein neues Verfahren zur Herstellung poröser Sinterkörper bereitzustellen, bei dem die nach Figur 2 A dargestellte Idealstruktur realisiert werden kann, so dass hinsichtlich der erzeugten Sinterkörper eine steigende Festigkeit bei gegebener Porosität resultiert. Des Weiteren soll durch das neue Verfahren Materialentmischungen bzw. Inselbildung in den erzeugten porösen Sinterkörpern vermieden werden, woraus ein sehr homogenes Werkstoffgefüge resultiert.

Diese Aufgabe wird durch die in den Ansprüchen gekennzeichneten Ausführungsformen gelöst.

Insbesondere wird ein Verfahren zur Herstellung poröser Sinterkörper bereitgestellt, umfassend die Schritte:
Erzeugen einer fest-flüssig-flüssig Kapillarsuspension auf Basis einer flüssigen Primärphase, einer flüssigen Sekundärphase, wobei die Primärphase und die Sekundärphase nicht miteinander mischbar sind, und einer mindestens bimodalen Feststoff-Partikelmischung, umfassend mindestens eine Feingutfraktion und mindestens eine Grobgutfraktion, wobei das Radienverhältnis der Teilchen von Grobfraktion : Teilchen der Feingutfraktion 5 :1 bis 100 :1 beträgt, wobei der Feststoffanteil in der Kapillarsuspension 1 bis 50 Volumenprozent beträgt, wovon der Anteil an Feingutfraktion 1 bis 40 Volumenprozent beträgt, und der Anteil der Sekundärphase, bezogen auf die Kapillarsuspension, 0,01-10 Volumenprozent beträgt, wobei die Primärphase den entsprechenden Restanteil der Kapillarsuspension ausmacht,
Verarbeiten der Kapillarsuspension in einen Formkörper,
Entfernen der Primärphase und der Sekundärphase von der Suspension, und Sintern, wodurch ein poröser Sinterkörper gebildet wird.

Als Grundlage des neuen Verfahrens zur Steigerung der Bauteilfestigkeit dient das in DE 10 2011 106 834 vorgestellte Verfahren zur Herstellung hochporöser Materialien auf Basis von Kapillarsuspensionen.

Eine Kapillarsuspension ist ein Dreiphasensystem fest - flüssig - flüssig, wobei die flüssigen Phasen nicht miteinander mischbar sind, wobei jeweils eine Flüssigkeit die Primärphase und die andere Flüssigkeit die Sekundärphase bildet und entweder die Primär- oder die Sekundärphase gegenüber dem Feststoff besser benetzend ist, so dass sich eine hochelastische, gelartige Substanz bildet, wobei das durch Kapillarkräfte zusammengehaltene Partikelnetzwerk stabil bleibt und keine Sedimentation auftritt. Bezüglich des Begriffes der "Kapillarsuspension" wird auf Science, Bd. 331, Nr. 6019, Seiten 897-900, verwiesen.

Die in Bezug auf das Volumen dominierende Flüssigkeit wird als Primärphase bzw. Hauptphase, die zweite nur in geringer Menge zugegebene Flüssigkeit wird als Sekundärphase bzw. Zweitphase bezeichnet. Als flüssige Phasen sind im Zusammenhang mit der vorliegenden Erfindung auch Materialien zu verstehen, die im schmelzflüssigen Zustand vorliegen, wie z.B. schmelzflüssige Polymere und Wachse. Bezüglich des Benetzungsverhaltens der flüssigen Phasen zum Feststoff der Kapillarsuspension werden die zwei Fälle eines Dreiphasengrenzwinkels θ > 90° (Fall 1) und θ < 90° (Fall 2) unterschieden. Hierbei ist entweder die Primär- oder die Sekundärphase gegenüber dem Feststoff besser benetzend. Wenn der in Teilchenform vorliegende Feststoff in der Primärphase homogen dispergiert ist und die Sekundärphase zugesetzt wird, bildet sich jeweils ein Teilchennetzwerk aus, das sich homogen durch die gesamte Primärphase zieht und sich in einer Änderung der rheologischen Eigenschaften äußert. Insbesondere kann sich dabei je nach Anteil der Sekundärphase und der Art der verwendeten Primärphase und des teilchenförmigen Feststoffs bzw. der multimodalen Partikelmischung eine hochelastische, gelartige Substanz bilden. Die Ausbildung des Teilchennetzwerks ist (sowohl für den Fall 1 als auch für den Fall 2) darauf zurückzuführen, dass die Sekundärphase als "Verbindungsflüssigkeit" zwischen den Feststoffteilchen vorliegt. Das durch Kapillarkräfte zusammengehaltene Partikelnetzwerk bleibt dabei weitgehend stabil, es tritt keine Sedimentation auf. Die erhaltene gelartige Substanz kann zu einem Formkörper geformt werden, der nach der Entfernung der Primär- und Sekundärphase gesintert werden kann.

Gemäß der vorliegenden Erfindung werden als Feststoff bzw. feste Phase eine mindestens bimodale Feststoff-Partikelmischung, d.h. eine bimodale oder multimodale Feststoff-Partikelmischung, verwendet. Die Partikelmischung kann hierbei aus einem oder aus verschiedenen Materialien bestehen, wobei die Feststoff- bzw. Pulverfraktionen gleiches bzw. ähnliches Benetzungsverhalten aufweisen sollten. Im Folgenden wird die vorliegende Erfindung weiter unter Bezugnahme auf bimodale Pulvermischungen erläutert, ohne jedoch darauf beschränkt zu sein. Im Falle solcher bimodaler Pulvermischungen können beide Pulverfraktionen von der Sekundärphase umbenetzt werden und der sich im dreiphasigen System (fest-flüssig-flüssig) (d.h. der Kapillarsuspension) einstellende Dreiphasenkontaktwinkel θ ist kleiner als 90°.

Durch das gezielte Einbringen einer Feingutfraktion zu einer Grobgutfraktion im Rahmen der Verwendung von Kapillarsuspensionen können folgende Vorteile beobachtet werden. Als Referenz dient jeweils die Grobgutfraktion ohne eingebrachte Feingutfraktion.

### (i) Verwendung gleichartiger Materialien

Durch die Verwendung von gleichem Material bei Grob- und Feingutfraktion können gleich zwei Vorteile miteinander kombiniert werden. Durch die erhöhte Sinteraktivität des Feingutes wird die Sintertemperatur erniedrigt, was zu einer Energieeinsparung führt. Des Weiteren wird die beschriebene Festigkeitssteigerung bei konstanter Porosität erreicht.

### (ii) Verwendung von Fremdmaterial als Feingutfraktion

Verwendet man Fremdmaterial als Feingutfraktion, so kann die Grobgutfraktion gezielt durch das Feingut dotiert werden. So können z.B. spezifisch von der Anwendung geforderte Mischphasen eingestellt werden, was sich in speziellen Struktur-Eigenschaftsbeziehungen, wie z.B. Festigkeitssteigerungen, äußert.

### (iii) Vermeidung von Entmischungsphänomenen

Liegt eine multimodale Partikelgrößenverteilung vor, so werden durch die Verwendung von Kapillarsuspensionen Entmischungsphänomene vermieden. Durch die feine Verteilung der mit dem Feinpulver beladenen Sekundärphase in den Zwickeln zwischen den groben Partikeln wird Inselbildung vermieden. Dies bedeutet, dass im resultierenden Sinterteil keine, mit einer Pulverfraktion übersättigten Bereiche vorliegen und somit ein sehr homogenes Werkstoffgefüge erreicht wird. Dies ist die Voraussetzung für die Erhöhung der Festigkeit.

Gemäß einer Ausführungsform (a) der vorliegenden Erfindung wird zur Erzeugung der Kapillarsuspension die mindestens bimodale Feststoff-Partikelmischung in der Primärphase homogen dispergiert wird und dann die Sekundärphase hinzugegeben.

Gemäß der vorliegenden Erfindung beträgt das Radienverhältnis der Teilchen von Grobfraktion : Teilchen der Feingutfraktion 5 :1 bis 100 :1. Vorzugsweise weist die Grobgutfraktion mittlere Teilchendurchmesser im Bereich von 1-100 µm auf, bestimmt mittels Laserbeugung (in Anlehnung an DIN EN 725-5, ISO13320). Bevorzugte mittlere Teilchendurchmesser der Feingutfraktion ergeben sich dann aus vorstehendem Radienverhältnis.

Gemäß einer anderen Ausführungsform (b) der vorliegenden Erfindung wird zur Erzeugung der Kapillarsuspension zunächst eine Suspension von der Grobgutfraktion in der Primärphase bereitgestellt und separat davon die Feingutfraktion in der Sekundärphase vordispergiert und anschließend die vordispergierte Sekundärphase in die zuvor bereitgestellte Suspension eingerührt.

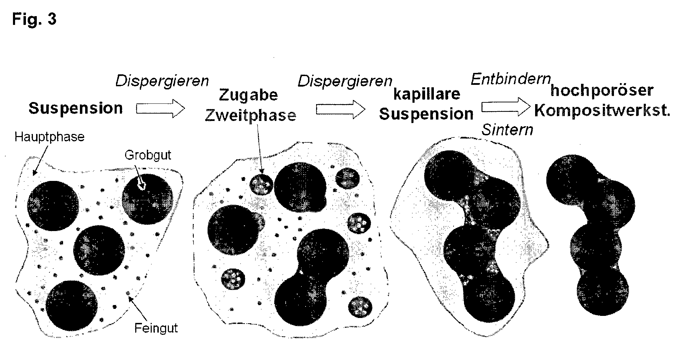

Bezüglich dieser beiden Ausführungsformen ist weiter folgendes anzumerken:
(a) Dispergierung der Pulvermischung in der Primärphase
   Wird die Pulvermischung in der Primärphase homogen dispergiert und die Sekundärphase hinzugegeben, bildet sich ein Partikelnetzwerk aus, welches sich homogen durch die komplette Primärphase zieht und durch Kapillarkräfte zusammengehalten wird, da dies der energetisch günstigste Zustand ist. Nach Sekundärphasenzugabe wird die Feingutfraktion durch die Sekundärphase umbenetzt und bei der Bildung der Kapillarbrücken mit der Sekundärphasenflüssigkeit in die Zwickel bzw. Kontaktstellen der Grobgutfraktion transportiert. Das Feingut liegt dann sehr homogen verteilt vor. Es handelt sich hierbei um einen selbstorganisierenden Prozess. Dieser Vorgang ist in Figur 3 schematisch dargestellt.
(b) Dispergierung der Feinpulverfraktion in der Sekundärphase
   Des Weiteren kann von einer Suspension ausgegangen werden, welche lediglich aus der Primärphase und der Grobgutfraktion besteht. Die Feingutfraktion wird in der Sekundärphase vordispergiert. Bringt man nun unter Rühren die vordispergierte Sekundärphase in die Suspension ein, so bilden sich Kapillarbrücken der Sekundärphase zwischen den Partikeln der Grobgutfraktion, da dies wiederum der energetisch günstigste Zustand ist, wodurch die Feingutfraktion in die Zwickeln zwischen den Partikeln der Grobgutfraktion transportiert wird. Das Feingut liegt im Probenkörper zwischen dem Grobgut dann sehr homogen verteilt vor. Es handelt sich hierbei wiederum um einen selbstorganisierenden Prozess.

Das Dispergieren der Feststoffmischungsbestandteile in der Primärphase bzw. Sekundärphase und die Zugabe der Sekundärphase erfolgen mittels geeigneter Knet- oder Rührvorrichtungen, beispielsweise mittels einer Kugelmühle, je nach den verwendeten Ausgangsmaterialien bei Drehzahlen im Bereich von 10 bis 2000 U/min, vorzugsweise 100 bis 2000 U/min, insbesondere 1000 bis 2000 U/min, und in einem Temperaturbereich von zwischen 10 °C und 200 °C, vorzugsweise zwischen 20 °C und 100 °C. Üblicherweise wird eine Kugelmühle verwendet werden, um eventuell vorliegende Agglomerate aufzubrechen. In einer Ausführungsform der vorliegenden Erfindung können Additive zugegeben werden, um ein Reagglomerieren der Partikel zu vermeiden. Solche Additive sind dem Fachmann bekannt. Beispielsweise kann hier Tween 20, Carl Roth GmbH & Co. KG, genannt werden. Anschließend wird bei üblicherweise hohen Drehzahlen mittels Dissolver die vorliegende Suspension dispergiert und die Sekundärphase hinzugegeben, sodass eine Kapillarsuspension entsteht. Als Folge des Kapillareffektes setzt eine Netzwerkbildung der Partikel ein. Hierbei wird die Feingutfraktion durch die feinverteilte Sekundärphase gezielt in die Zwickel des Grobgutes transportiert. Hieraus resultiert eine Gleichverteilung des Feingutes, Entmischungsphänomene werden vermieden.

Insofern gemäß dem erfindungsgemäßen Verfahren zur Herstellung poröser Sinterkörper zunächst eine hochelastische, gelartige, formbare Masse erhalten wird, kann aus dieser hochelastischen, gelartigen Masse in einfacher Weise ein Formkörper hergestellt werden. Die so entstandene Masse kann dann im nächsten Schritt zu Formkörpern weiterverarbeitet werden, z.B. durch Formgebungsverfahren wie Extrusion, Niederdruckspritzgießen, Rakeldruck oder Siebdruck, wobei dem Fachmann geläufige Verfahrensparameter eingesetzt werden, die auf die jeweils vorliegende gelartige Masse abgestimmt sind.

Gegebenenfalls kann zwischen dem Dispergieren und dem Entfernen vor dem eigentlichen Formgebungsschritt auch ein Auftragen der Kapillarsuspension auf einen entsprechenden Träger durchgeführt werden. So kann die Kapillarsuspension auch als Schicht auf einen ebenen oder vorgeformten Träger oder eine Gerüststruktur bzw. Precursorstruktur, wie z.B. eine Filtergerüststruktur, aufgebracht und dann auf diesem bzw. dieser entbindert und gesintert werden. Wenn der Träger poröser Natur ist, kann er selbst als Absorbermaterial entbindernd wirken.

Die so hergestellten Formkörper (Grünkörper = Formkörper nach der Herstellung) werden anschließend vorzugsweise selektiv entbindert (Erzeugung des sogenannten Braunkörpers). Hierbei wird - wie nachstehend weiter ausgeführt - vorzugsweise erst die Primärphase durch entsprechende Entbinderungsverfahren und im Anschluss daran die Sekundärphase entfernt. Überraschenderweise ermöglicht dieses Vorgehen in vorteilhafter Weise ein schonendes Entfernen der Primär- und Sekundärphase, ohne die eingestellte Partikel-Netzwerkstruktur zu zerstören bzw. zu beeinträchtigen. Was den Schritt des Entfernens der Primärphase und der Sekundärphase betrifft, so wird gemäß einer bevorzugten Ausführungsform zunächst die Primärphase von der Suspension bis zu einem Ausmaß von mindestens 85 %, vorzugsweise von mindestens 90 %, bezogen auf Volumenprozent der flüssigen Primärphase, entfernt. Durch selektives Entfernen von (zuerst) Haupt- und (anschließend) Sekundärphase aus dem Grünkörper (= Probenteil nach der Formgebung) wird der Braunkörper hergestellt. Dies erfolgt bevorzugt mittels Extraktionsverfahren im Temperaturbereich zwischen 20°C bis 70°C bei einer Extraktionsdauer von 1 h bis 120 h und/ oder mittels thermischer Pyrolyse im Temperaturbereich zwischen 100°C bis 1100°C bei einer Prozesszeit zwischen 1 h bis 48 h bei Normalatmosphäre und Normaldruck. Die passende Entbinderungsstrategie zur Entfernung der Primärphase ist anhand des verwendeten Materials der Primärphase auszuwählen. Die geeignete Vorgehensweise des Entbinderns kann von einem Fachmann ohne weiteres ausgewählt werden. Hierzu eignen sich wie folgt:

### a) Flüssigkeiten: kapillare Extraktion

Werden Öle oder sonstige bei Raumtemperatur flüssige Materialien als Primärphase verwendet, welche nicht oder nur schwer verdampft werden können, findet die kapillare Extraktion Anwendung. Hierbei wird der Grünkörper auf eine saugfähige Unterlage gebettet, wobei durch die Kapillarkraft der Unterlage die Primärphase aus dem Probenteil entweicht.

### b) Flüssigkeiten: Trocknung

Werden Öle oder sonstige bei Raumtemperatur flüssige Materialien als Primärphase verwendet, welche leicht verdampft werden können, findet die Trocknung Anwendung. Dies erfolgt üblicherweise bei Raumtemperatur oder leicht erhöhter Temperatur und entsprechend der Temperatur angepasstem Systemdruck.

### c) Wachse: kapillare Extraktion oder Lösemittelextraktion

Werden Wachse oder sonstige bei Raumtemperatur erstarrt vorliegende Materialien als Primärphase verwendet, so können diese mittels kapillarer Extraktion (s. a) vorstehend) bei Temperaturen über dem Schmelzpunkt der Primärphase oder mittels Lösemittelextraktion bei Temperaturen unterhalb des Schmelzpunktes der Primärphase aus dem Grünkörper entfernt werden.

Eventuell im Probenteil verbliebene Anteile an Primärphase werden bei der anschließenden thermischen Zersetzung der Sekundärphase mit entfernt.

Anschließend wird der Braunkörper bei entsprechendem Druck, entsprechender Atmosphäre und bei Temperaturen in Abhängigkeit des zu sinternden Materials gesintert. Die Abstimmung der Sinterparameter auf das jeweils vorliegende Feststoffmaterialsystem liegt im handwerklichen Ermessen eines Fachmanns. Nach dem Entfernen der Primär- und Sekundärphase aus dem System sowie dem abschließenden Sintern kann somit ein hochporöser Sinterkörper mit verbesserten mechanischen Eigenschaften und sehr homogenem Werkstoffgefüge hergestellt werden.

Als Feststoff kommen im Rahmen des erfindungsgemäßen Verfahrens sämtliche metallische (z.B. Fe, Al, Mg, etc), nichtmetallisch anorganische (z.B. Al₂O₃, ZrO₂, SiO₂, TiO₂, Ca₃(PO₄)₂, SiC, etc.) und nichtmetallisch organische Materialien (z.B. PVC, PA, PTFE, etc.) in Frage.

In einer Ausführungsform sind die Feststoffpartikel der mindestens bimodalen Feststoff-Partikelmischung aus Oxiden, Carbiden, Nitriden, Phosphaten, Glaspulver oder einer Kombination davon ausgewählt. Die Oxide können insbesondere aus Al₂O₃, ZrO₂, CeO₂, TiO₂, MgO, ZnO, Fe₂O₃, Fe₃O₄, SiO₂, Aluminiumtitanat und Bariumtitanat, die Carbide insbesondere aus SiC, BC, HfC, TaC und WC, die Nitride insbesondere aus SiN, AIN und TiN und die Phosphate insbesondere aus Tricalciumphosphat und Hydroxylapatit ausgewählt sein. Das eingesetzte Glaspulver kann insbesondere auf Basis von Kalk-Natron-Glas, Quarzglas aus reinem Siliciumdioxid, Bleiglas, Wasserglas, Borosilikatglas, Borphosphatglas, Alumosilikatglas, Fluoridglas oder Chalkogenidglas sein.

In einer anderen Ausführungsform sind die Feststoffpartikel der mindestens bimodalen Feststoff-Partikelmischung aus teilchenförmigen thermoplastischen Polymeren ausgewählt. Insbesondere sind die thermoplastischen Polymere aus Polyethylen (PE), Polypropylen (PP), Polyvinylchlorid (PVC), Polystyrol (PS), Polytetrafluorethylen (PTFE), Polyamid (PA), Silikonen, Polycarbonat (PC), Polyethylenterephthalat (PET), Acrylnitril-Butadien-Styrol (ABS), Polylactat (PLA), Polymethylmethacrylat (PMMA) und Polyetheretherketon (PEEK) ausgewählt.

Wenn im Rahmen des erfindungsgemäßen Verfahrens metallische (z.B. Fe, Al, Mg, etc) Pulver als Grobgut- bzw. Feingutfraktion verwendet werden, erfolgt das abschließende Sintern in der Regel unter reduzierender Wasserstoff- oder inerter Schutzgasatmosphäre (N₂, Ar).

Das Sintern wird im Fall des Festkörpers aus Polymerteilchen bei wesentlich niedrigeren Temperaturen durchgeführt als im Fall des Festkörpers aus einem anorganischen teilchenförmigen Feststoff, um ein vollständiges Schmelzen und eine Zersetzung der Polymerteilchen zu verhindern. Insbesondere wird das Sintern bei einer Temperatur im Bereich von 50 bis 300 °C, bevorzugt von 70 bis 280 °C, besonders bevorzugt von 90 bis 260 °C durchgeführt, wobei die geeignete Sintertemperatur abhängig vom Erweichungs- bzw. Schmelzpunkt des verwendeten Polymers durch den Fachmann in einfacher Weise ausgewählt werden kann, um einen erfindungsgemäßen porösen polymeren Werkstoff mit einer für den jeweiligen Verwendungszweck ausreichenden Festigkeit zu erhalten.

Als Primärphase bzw. Sekundärphase kommen sämtliche polare (Wasser, wässrige Polysaccharid- und Polymerlösungen, polare Polymere etc.) und unpolare Flüssigkeiten (Öle, Wachse, unpolare Polymere) in Betracht, welche miteinander nicht mischbar sind, und geeignete Benetzungseigenschaften bezogen auf den verwendeten Feststoffen besitzen. Hierbei besteht der Feedstock aus 1-50 vol% Feststoffanteil, wobei der Feingutanteil zwischen 1-40 vol%, vorzugsweise von 5 bis 30 vol%, bezogen auf den gesamten Feststoffanteil, variiert, sowie 0,01-10 vol%, vorzugsweise von 0,25 bis 7 vol%, Sekundärphase und entsprechendem Restanteil Primärphase.

Gemäß einer bevorzugten Ausführungsform der vorliegenden Erfindung wird als Primärphase eine unpolare Flüssigkeit, wobei, wie bereits vorstehend ausgeführt, hierunter im Rahmen der vorliegenden Erfindung auch Materialien verstanden werden, die im schmelzflüssigen Zustand vorliegen, wie z.B. schmelzflüssige Polymere und Wachse, und als Sekundärphase eine polare Flüssigkeit verwendet.

Gemäß einer weiteren Ausführungsform des vorliegenden Verfahrens ist die unpolare Flüssigkeit aus der Gruppe, bestehend aus Ölen, geschmolzenen Wachsen, geschmolzenen unpolaren Polymeren und unpolaren organischen Flüssigkeiten, ausgewählt. Bevorzugt werden geschmolzene Wachse eingesetzt. Insbesondere können Paraffinwachse, Carnaubawachse, Montanwachse, Polyethylenwachse, Polypropylenwachse und Polyamidwachse verwendet werden. Ferner können auch Paraffinöle, Silikonöle, Mineralöle, Phthalate bzw. aliphatische Kohlenwasserstoffe einschließlich solchen wie Octanol als unpolare Flüssigkeit eingesetzt werden.

Die polare Flüssigkeit wird vorzugsweise aus der Gruppe, bestehend aus Wasser, wässrigen Polymerlösungen, wässrigen Polysaccharidlösungen und geschmolzenen polaren Polymeren, ausgewählt. Bevorzugt werden Wasser und entsprechende wässrige Lösungen, Polyethylenglykol (PEG), Polyvinylalkohol (PVA), Polyvinylpyrrolidon (PVP), Saccharose bzw. Glycerin eingesetzt, wobei PEG, Polyvinylpyrrolidon, Saccharose, Wasser und entsprechende wässrige Lösungen besonders bevorzugt sind. Insbesondere können wässrige Saccharoselösungen oder Polyethylenglykole (PEG) eingesetzt werden.

Das vorgestellte Verfahren dient u.a. zur Festigkeitssteigerung poröser Materialien mit Anwendung beispielsweise in den folgenden technischen Gebieten: Filter in der Abgas- und Abwasseraufbereitung, Elektrodenmaterialien, Gasdiffusionsschichten, Katalysatorträger, medizinische Applikationen wie Scaffolds sowie sanitärkeramische Anwendungen.

Erfindungsgemäß wird ferner ein poröser Sinterkörper bereitgestellt, der mit dem vorstehend beschriebenen Verfahren erhältlich ist. Gemäß einer bevorzugten Ausführungsform weist der poröse Sinterkörper eine Porosität von 30 bis 80 %, vorzugsweise von 30 bis 60 %, mehr bevorzugt größer als 50 %, und eine mittlere Porengröße d₅₀ von 0,1 bis 100 µm, insbesondere von 0,5 bis 50 µm bzw. von 0,5 bis 10 µm bzw. von 1 bis 5 µm auf. Die Porosität und die mittlere Porengröße werden mittels Quecksilberporosimetrie (in Anlehnung an DIN66133), Archimedesdichte (in Anlehnung an DIN EN 993-18) und quantitativer Gefügeanalyse (in Anlehnung an DIN EN ISO 643) bestimmt. Die Porosität der erfindungsgemäßen porösen Sinterkörper ist dabei eine offene und durchgängige Porosität. Die Kombination aus kleinen, vorwiegend runden Poren und hoher offener Porosität wird durch das erfindungsgemäße Verfahren in äußerst einfacher Weise erzielt. Zwar sind poröse Sinterkörper per se bekannt, jedoch zeichnen sich die erfindungsgemäß erhältlichen porösen Sinterkörper zudem durch das entsprechende Verhältnis von Porengröße zu Partikelgröße aus, welches in der Regel im Bereich von größer als 3:1 liegt.

Die Figuren zeigen:
Fig. 1 eine schematische Darstellung des Feststoff/Porenverhältnisses bei niedrigen und hohen Porositäten.
Fig. 2 die Möglichkeiten der Partikelkonfiguration resultierend aus Grob- und Feingut einer multimodalen Partikelmischung. A: Idealstruktur, B: gefundene Realstruktur, C: zugehörende Rasterelektronenmikroskopische Aufnahme zu B, jeweils aus F. Buse, "Neuartige poröse α-Al₂O₃-Werkstoffe und -Membranen", Dissertation Westfälische Wilhelms-Universität Münster (2002).
Fig. 3 eine schematische Darstellung der Realisierung der vorausgegangenen Idealstruktur.
Fig.4 das Pyrolyseprofil (links) und Sinterprofil (rechts) der Referenzprobe, Heizraten jeweils in [°C/min].
Fig. 5 eine rasterelektronenmikroskopische Aufnahme (Rückstreudetektor) der Schlifffläche der Referenzprobe. Schwarz = Pore, Grau= α-Al₂O₃.
Fig. 6 das Pyrolyseprofil (links) und Sinterprofil (rechts) von Ausführungsbeispiel 1, Heizraten jeweils in [°C/min].
Fig. 7 eine rasterelektronenmikroskopische Ausnahme (Rückstreudetektor) der Schlifffläche von Ausführungsbeispiel 1. Schwarz = Pore, Grau= α-Al₂O₃.
Fig. 8 das Pyrolyseprofil (links) und Sinterprofil (rechts) von Ausführungsbeispiel 2, Heizraten jeweils in [°C/min].
Fig. 9 eine rasterelektronenmikroskopische Aufnahme (Rückstreudetektor) der Schlifffläche von Ausführungsbeispiel 2. Schwarz = Pore, Grau= α-Al₂O₃, Weiß = t-Zr02(Y203).
Fig. 10 eine zusammenfassende Darstellung der mechanischen Kennwerte der Ausführungsbeispiele.

Die vorliegende Erfindung wird durch die nachfolgenden Ausführungsbeispiele näher erläutert.

### Referenzbeispiel

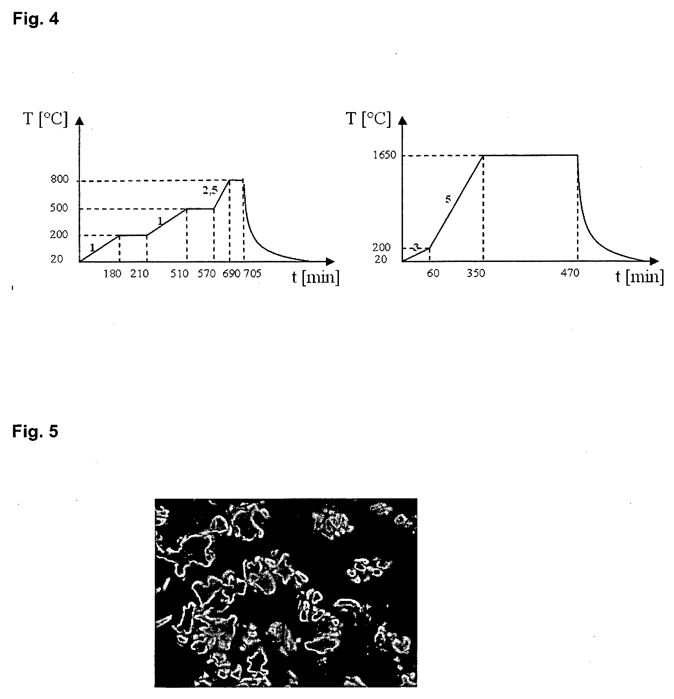

Der Feedstock, bestehend aus 25 vol% α-Al₂O₃ Feststoff (CT19FG, Almatis) mit einer mittleren Partikelgröße x_{50,partikel}= 5,76 µm (α-Al₂O₃, CT19FG, Almatis), 72,5 vol% Paraffinöl (Paraffinöl dünnflüssig, Carl Roth GmbH + Co. KG) als Primärphase, 0,45 vol% (bezogen auf Bulkphase) Netzmittel (Tween 20, Carl Roth GmbH + Co. KG) und 2,5 vol% Saccharoselösung (1,853 M) als Sekundärphase wurde bei Raumtemperatur mittels Rühren per Dissolverrüher bei 1200s⁻¹ die Kapillarsuspension hergestellt und zu Probenkörpern per Siebdruckdruck weiter verarbeitet. Aus dem so erhaltenen Grünkörper wurde im Anschluss zuerst mittels kapillarer Extraktion per saugfähiger Unterlage weitestgehend die Primärphase entfernt. Der Probenkörper wurde daraufhin dem Temperaturprofil nach Figur 4 (links) unterzogen, wodurch Reste der Primärphase sowie die Sekundärphase thermisch zersetzt werden. Im Anschluss wurde der Probenkörper gemäß dem Sinterprofil nach Figur 4 (rechts) gesintert. Die resultierende Gesamtporosität beträgt 55±2% bei einer Biegefestigkeit σ_{f} von 6,5±1,3 MPa und einer Druckfestigkeit σ_{c} von 16,3±3MPa. Figur 5 zeigt die Schlifffläche des resultierenden Sinterteils.

### Beispiel 1:

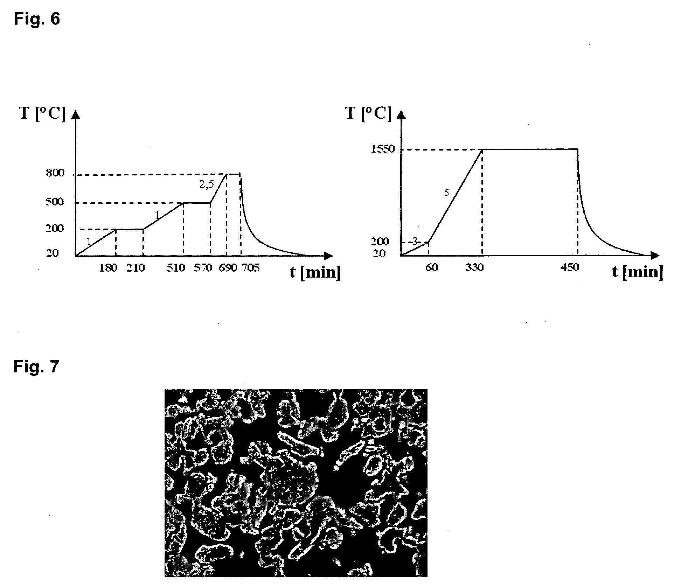

Der Feedstock, bestehend aus 20 vol% Gesamtfeststoffanteil, davon 75% mit einer Partikelgröße von x_{50,Partikel}= 5,76 µm (α-Al₂O₃, CT19FG, Almatis) und 25% mit einer mittleren Partikelgröße x_{50,Partikel}= 0,7 µm (α-Al₂O₃, CT19FG, Almatis), 77,5 vol% Paraffinöl (Paraffinöl dünnflüssig, Carl Roth GmbH + Co. KG) als Primärphase und 2,5 vol% Saccharoselösung (1,853 M) als Sekundärphase wurde bei Raumtemperatur mittels Rühren per Dissolverrührer bei 1200s⁻¹ und Kneten per Kugelmühle für 24h die Kapillarsuspension hergestellt und zu Probenkörpern per Siebdruckdruck weiter verarbeitet. Aus dem so erhaltenen Grünkörper wurde im Anschluss zuerst mittels kapillarer Extraktion per saugfähiger Unterlage weitestgehend die Primärphase entfernt. Der Probenkörper wurde daraufhin dem Temperaturprofil nach Figur 6 (links) unterzogen, wodurch Reste der Primärphase sowie die Sekundärphase thermisch zersetzt werden. Im Anschluss wurde der Probenkörper gemäß dem Sinterprofil nach Figur 6 (rechts) gesintert. Die resultierende Gesamtporosität beträgt 55±2% bei einer Biegefestigkeit σ_{f} von 9,5±0,7 MPa und einer Druckfestigkeit σ_{c} von 29,1±5,6 MPa. Figur 7 zeigt die Schlifffläche des resultierenden Sinterteils. Der Kontaktwinkel der Sekundärphase gegen das verwendete α-Al₂O₃ von Grob- und Feingut beträgt θ_{Sa} = 51,8±1°, Grob- und Feingutfraktion weisen somit gleiches Benetzungsverhalten gegenüber der Sekundärphase auf. Der resultierende Dreiphasenkontaktwinkel liegt bei θ_{SB} = 66°.

Dieses Ausführungsbeispiel zeigt, dass bei niedrigerer Sintertemperatur, d.h. geringerem Energieaufwand, mindestens die gleiche Festigkeit erzielt werden kann.

### Beispiel 2:

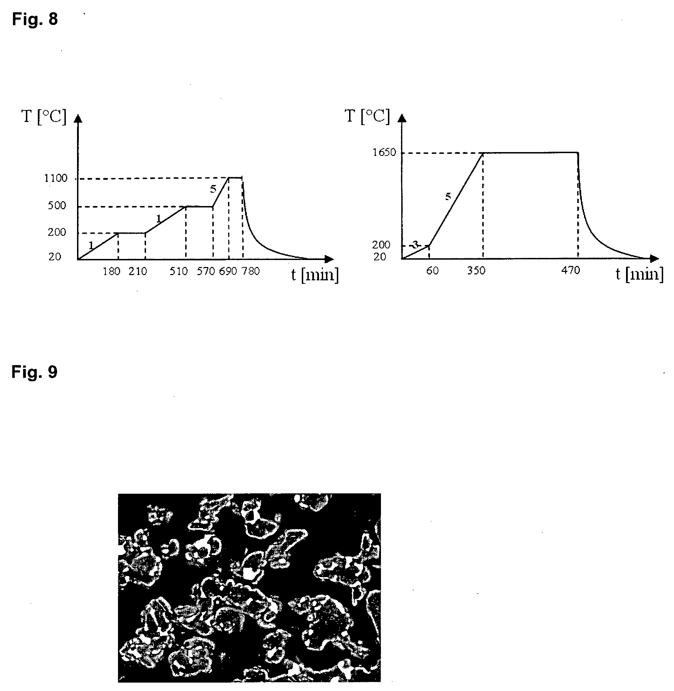

Der Feedstock, bestehend aus 15 vol% Gesamtfeststoffanteil, davon 90% mit einer Partikelgröße von x_{50,Partikel}= 5,76 µm (α-Al₂O₃, CT19FG, Almatis) und 10% mit einer mittleren Partikelgröße x_{50,Partikel}= 0,389 µm (t-ZrO₂(Y₂O₃), TZ-3YS-E, Tosoh), 82,5 vol% Paraffinöl (Paraffinöl dünnflüssig, Carl Roth GmbH + Co. KG) als Primärphase und 2,5 vol% Saccharoselösung (1,853 M) als Sekundärphase wurde bei Raumtemperatur mittels Rühren per Dissolverrührer bei 1200s⁻¹ und Kneten per Kugelmühle für 24h die Kapillarsuspension hergestellt und zu Probenkörpern per Siebdruckdruck weiter verarbeitet. Aus dem so erhaltenen Grünkörper wurde im Anschluss zuerst mittels kapillarer Extraktion per saugfähiger Unterlage weitestgehend die Primärphase entfernt. Der Probenkörper wurde daraufhin dem Temperaturprofil nach Figur 8 (links) unterzogen, wodurch Reste der Primärphase sowie die Sekundärphase thermisch zersetzt werden. Im Anschluss wurde der Probenkörper gemäß dem Sinterprofil Figur 8 (rechts) gesintert. Die resultierende Gesamtporosität beträgt 55±2% bei einer Biegefestigkeit σ_{f} von 15,8±0,9 MPa und einer Druckfestigkeit σ_{c} von 52,7±11 MPa. Figur 9 zeigt die Schlifffläche des resultierenden Sinterteils. Der Kontaktwinkel der Sekundärphase gegen das verwendete α-Al₂O₃ als Grobgutfraktion beträgt θ_{Sa} = 51,8±1°, der resultierende Dreiphasenkontaktwinkel liegt bei θ_{SB} = 66°. Der Kontaktwinkel der Sekundärphase gegen das verwendete t-ZrO₂(Y₂O₃) als Feingutfraktion beträgt θ_{Sa} = 63,1±4,2°, der resultierende Dreiphasenkontaktwinkel liegt bei θ_{SB} = 83,8°. Grob- und Feingutfraktion weisen somit ähnliches Benetzungsverhalten gegenüber der Sekundärphase auf.

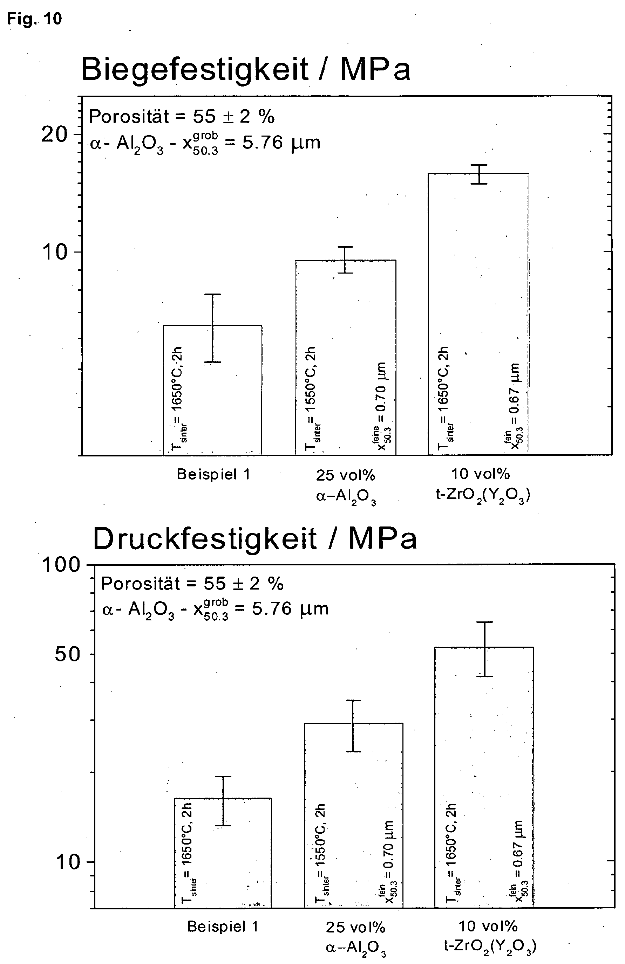

Figur 10 gibt eine zusammenfassende Darstellung der nachstehend aufgelisteten Ausführungsbeispiele. Es ist zu erkennen, dass die Verwendung zweier Partikelfraktionen mit deutlich unterschiedlicher Größe bei konstanter Porosität zu signifikant höheren Festigkeiten führt. Die Dotierung mit arteigenem Material führt bei σ_{f} zu einer Festigkeitssteigerung um das 1,5 fache und bei σ_{c} zu einer Steigerung um den Faktor 1,8. Dotiert man die Grobgutfraktion mit Fremdmaterial, so ergibt sich aufgrund der Mischphasenbildung im Ausführungsbeispiel eine Festigkeitssteigerung bei σ_{f} um das 2,4 fachen und bei σ_{c} eine Steigerung um den Faktor 3,2. Dies ist das Ergebnis der homogenen Verteilung der eingebrachten Feinpulverfraktion unter Verwendung einer Kapillarsuspension. Betrachtet man die zu dem jeweiligen Ausführungsbeispiel gehörigen Schliffbilder, so wird dieser Sachverhalt verdeutlicht. Im Rückstreuelektronenkontrast wird ersichtlich, dass die Dotierung mit Feinpulver zu deutlich runderen Porenstrukturen und gleichverteilten Mischphasen führt. Dies kann als Beleg gewertet werden, dass die eingebrachte Feinpulverfraktion in den Zwickeln des Grobgutes, durch die eingebrachte Sekundärphasenflüssigkeit, abgeschieden wurde. Die so ausgebildeten Sinterhälse, runden Porenstrukturen und Mischphasen führen zu höheren Festigkeiten im Sinterteil.

## Patentansprüche

1. Verfahren zur Herstellung poröser Sinterkörper, umfassend die Schritte:
Erzeugen einer fest-flüssig-flüssig Kapillarsuspension auf Basis einer flüssigen Primärphase, einer flüssigen Sekundärphase, wobei die Primärphase und die Sekundärphase nicht miteinander mischbar sind, und einer mindestens bimodale Feststoff-Partikelmischung, umfassend mindestens eine Feingutfraktion und mindestens eine Grobgutfraktion, wobei das Radienverhältnis der Teilchen von Grobfraktion : Teilchen der Feingutfraktion 5 :1 bis 100 :1 beträgt, wobei der Feststoffanteil in der Kapillarsuspension 1 bis 50 Volumenprozent beträgt, wovon der Anteil an Feingutfraktion 1 bis 40 Volumenprozent beträgt, und der Anteil der Sekundärphase, bezogen auf die Kapillarsuspension, 0,01-10 Volumenprozent beträgt, wobei die Primärphase den entsprechenden Restanteil der Kapillarsuspension ausmacht,
Verarbeiten der Kapillarsuspension in einen Formkörper,
Entfernen der Primärphase und der Sekundärphase von der Suspension, und Sintern, wodurch ein poröser Sinterkörper gebildet wird.

2. Verfahren nach Anspruch 1, wobei zur Erzeugung der Kapillarsuspension die Feststoff-Partikelmischung in der Primärphase homogen dispergiert wird und dann die Sekundärphase hinzugegeben wird.

3. Verfahren nach Anspruch 1, wobei zur Erzeugung der Kapillarsuspension zunächst eine Suspension von der Grobgutfraktion in der Primärphase bereitgestellt wird und separat davon die Feingutfraktion in der Sekundärphase vordispergiert wird und anschließend die vordispergierte Sekundärphase in die zuvor bereitgestellte Suspension eingerührt wird.

4. Verfahren nach einem der Ansprüche 1 bis 3, wobei die Grobgutfraktion mittlere Teilchendurchmesser im Bereich von 1-100 µm aufweisen.

5. Verfahren nach einem der Ansprüche 1 bis 4, wobei die Feststoffpartikel der mindestens bimodalen Feststoff-Partikelmischung aus Oxiden, Carbiden, Nitriden, Phosphaten, Glaspulver oder einer Kombination davon ausgewählt sind.

6. Verfahren nach Anspruch 5, wobei die Oxide aus Al₂O₃, ZrO₂, CeO₂, TiO₂, MgO, ZnO, Fe₂O₃, Fe₃O₄, SiO₂, Aluminiumtitanat und Bariumtitanat ausgewählt sind, die Carbide aus SiC, BC, HfC, TaC und WC ausgewählt sind, die Nitride aus SiN, AIN und TiN ausgewählt sind, und die Phosphate aus Tricalciumphosphat und Hydroxylapatit ausgewählt sind.

7. Verfahren nach Anspruch 5, wobei das eingesetzte Glaspulver auf Basis von Kalk-Natron-Glas, Quarzglas aus reinem Siliciumdioxid, Bleiglas, Wasserglas, Borosilikatglas, Borphosphatglas, Alumosilikatglas, Fluoridglas oder Chalkogenidglas ist.

8. Verfahren nach einem der Ansprüche 1 bis 7, wobei als Primärphase eine unpolare Flüssigkeit und als Sekundärphase eine polare Flüssigkeit verwendet wird.

9. Verfahren nach Anspruch 8, wobei die flüssige unpolare Primärphase aus der Gruppe, bestehend aus Ölen, geschmolzenen Wachsen, geschmolzenen unpolaren Polymeren und unpolaren organischen Flüssigkeiten, ausgewählt ist.

10. Verfahren nach einem der Ansprüche 1 bis 9, wobei die flüssige polare Sekundärphase aus der Gruppe, bestehend aus Wasser, wässrigen Polymerlösungen, wässrigen Polysaccharidlösungen und geschmolzenen polaren Polymeren, ausgewählt ist.

11. Verfahren nach einem der Ansprüche 1 bis 10, wobei die flüssige unpolare Primärphase ein geschmolzenes Wachs oder Paraffinöl ist und die flüssige unpolare Sekundärphase eine wässrige Polysaccharidlösung oder PEG ist.

12. Verfahren nach einem der Ansprüche 1 bis 4, wobei die Feststoffpartikel der mindestens bimodalen Feststoff-Partikelmischung aus teilchenförmigen thermoplastischen Polymeren ausgewählt sind.

13. Verfahren nach Anspruch 12, wobei als Primärphase eine polare Flüssigkeit und als Sekundärphase eine unpolare Flüssigkeit verwendet wird.

14. Verfahren nach einem der Ansprüche 1 bis 13, wobei im Schritt des Entfernens zunächst die Primärphase von der Suspension bis zu einem Ausmaß von mindestens 85 %, bezogen auf Volumenprozent der flüssigen Primärphase, entfernt wird, wobei das Entfernen, in Abhängigkeit von dem gewählten Primärphasenmaterial, (i) durch kapillare Extraktion, (ii) Lösemittelextraktion oder (iii) Trocknung erfolgt, und anschließend das Entfernen der Sekundärphase erfolgt.

## Claims

1. Method for the production of porous sintered bodies, comprising the steps:
producing a solid-liquid-liquid capillary suspension on the basis of a liquid primary phase, a liquid secondary phase, with the primary phase and the secondary phase not being miscible with each other, and an at least bimodal solid particle mixture, comprising at least one fine material fraction and at least one coarse material fraction, with the radius ratio of the particles of coarse material fraction: particles of fine material fraction being 5 : 1 to 100 : 1, with the solid fraction in the capillary suspension being 1 to 50 volume percent, of which the percentage of the fine material fraction is 1 to 40 volume percent, and the percentage of the secondary phase with reference to the capillary suspension being 0.01 - 10 volume percent, with the primary phase accounting for the corresponding remaining percentage of the capillary suspension,
forming the capillary suspension into a mold,
removing the primary phase and secondary phase from the suspension, and sintering, thus obtaining a porous sintered body.

2. Method according to claim 1, in which in order to produce the capillary suspension the solid particle mixture is being homogeneously dispersed in the primary phase and then the secondary phase is being added.

3. Method according to claim 1, in which in order to produce the capillary suspension first a suspension of the coarse material fraction is being provided in the primary phase and separately the fine material fraction is being pre-dispersed in the secondary phase, and subsequently the pre-dispersed secondary phase is stirred into the previously provided suspension.

4. Method according to any of the claims 1 to 3, in which the coarse material fraction has medium particle sizes in the range of 1-100 µm.

5. Method according to any of the claims 1 to 4, in which the solid particles of the at least bimodal solid particle mixture are selected from oxides, carbides, nitrides, phosphates, glass powder or a combination thereof.

6. Method according to claim 5, in which the oxides are selected from Al₂O₃, ZrO₂, CeO₂, TiO₂, MgO, ZnO, Fe₂O₃, Fe₃O₄, SiO₂, aluminum titanate and barium titanate, the carbides being selected from SiC, BC, HfC, TaC and WC, the nitrides being selected from SiN, AIN and TiN, and the phosphates being selected from tricalcium phosphate and hydroxylapatite.

7. Method according to claim 5, in which the utilized glass powder is on the basis of soda-lime glass, silica glass of pure silicon dioxide, lead glass, sodium silicate, borosilicate glass, borophosphate glass, aluminosilicate glass, fluoride glass or chalcogenide glass.

8. Method according to any of the claims 1 to 7, in which a non-polar liquid is used as primary phase and a polar liquid is used as secondary phase.

9. Method according to claim 8, in which the liquid non-polar primary phase is selected from the group consisting of oils, molten waxes, molten non-polar polymers and non-polar organic liquids.

10. Method according to any of the claims 1 to 9, in which the liquid polar secondary phase is selected from the group consisting of water, aqueous polymer solutions, aqueous polysaccharide solutions and molten polar polymers.

11. Method according to any of the claims 1 to 10, in which the liquid non-polar primary phase is a molten wax or paraffin oil and the liquid non-polar secondary phase is an aqueous polysaccharide solution or PEG.

12. Method according to any of the claims 1 to 4, in which the solid particles of the at least bimodal solid particle mixture are selected from particulate thermoplastic polymers.

13. Method according to claim 12, in which a polar liquid is used as primary phase and a non-polar liquid is used as secondary phase.

14. Method according to any of the claims 1 to 13, in which in the step of removing first the primary phase is being removed from the suspension up to an extent of at least 85% with regard to the volume percent of the liquid primary phase, with the removal taking place, depending on the selected primary phase material, (i) by means of capillary extraction, (ii) solvent extraction or (iii) drying, and subsequently the secondary phase is being removed.

## Revendications

1. Procédé servant à fabriquer des corps frittés poreux, comprenant les étapes suivantes consistant à :
produire une suspension capillaire solide-liquide-liquide à base d'une phase primaire liquide, d'une phase secondaire liquide, sachant que la phase primaire et la phase secondaire ne peuvent pas être mélangées l'une à l'autre, et un mélange de particules de matière solide au moins bimodal, comprenant au moins une fraction de produit fin et au moins une fraction de produit grossier, sachant que le rapport de rayons entre les particules de la fraction grossière et les particules de la fraction de produit fin est de 5:1 à 100:1, sachant que la proportion de matière solide dans la suspension capillaire est de 1 à 50 % en volume, la proportion en fraction de produit fin étant de 1 à 40 % en volume et que la proportion de la phase secondaire, par rapport à la suspension capillaire, est de 0,01 - 10 % en volume, sachant que la phase primaire représente la proportion restante correspondante de la suspension capillaire ;
transformer la suspension capillaire en un corps moulé ;
éliminer la phase primaire et la phase secondaire de la suspension ; et
procéder au frittage, ce qui permet de former un corps fritté poreux.

2. Procédé selon la revendication 1, sachant qu'afin de produire la suspension capillaire, le mélange de particules de matière solide est dispersé de manière homogène dans la phase primaire puis la phase secondaire est ajoutée.

3. Procédé selon la revendication 1, sachant qu'afin de produire la suspension capillaire, une suspension de la fraction de produit grossier est dans un premier temps fournie dans la phase primaire et, de manière séparée, la fraction de produit fin est dispersée au préalable dans la phase secondaire et la phase secondaire préalablement dispersée est introduite par agitation immédiatement après dans la suspension fournie au préalable.

4. Procédé selon l'une quelconque des revendications 1 à 3, sachant que la fraction de produit grossier présente des diamètres de particule moyens compris dans la plage de 1 - 100 µm.

5. Procédé selon l'une quelconque des revendications 1 à 4, sachant que les particules de matière solide du mélange de particules de matière solide au moins bimodal sont choisies parmi les oxydes, les carbures, les nitrures, les phosphates, la poudre de verre ou une combinaison de ces derniers.

6. Procédé selon la revendication 5, sachant que les oxydes sont choisis parmi Al₂O₃, ZrO₂, CeO₂, TriO₂, MgO, ZnO, Fe₂O₃, Fe₃O₄, SiO₂, le titanate d'aluminium et le titanate de baryum, que les carbures sont choisis parmi SiC, BC, HfC, TaC et WC, que les nitrures sont choisis parmi SiN, AIN et TiN, et que les phosphates sont choisis parmi le phosphate tricalcique et l'hydroxyapatite.

7. Procédé selon la revendication 5, sachant que la poudre de verre utilisée est à base de verre sodocalcique, de verre de quartz composé d'un dioxyde de silicium pur, de cristal de plomb, de verre soluble, de verre de borosilicate, de verre de phosphate borique, de verre d'aluminosilicate, de verre fluoré ou de verre de chalcogénure.

8. Procédé selon l'une quelconque des revendications 1 à 7, sachant qu'un liquide apolaire est utilisé en tant que phase primaire et qu'un liquide polaire est utilisé en tant que phase secondaire.

9. Procédé selon la revendication 8, sachant que la phase primaire apolaire liquide est choisie parmi le groupe constitué d'huiles, de cires fondues, de polymères apolaires fondus et de liquides organiques apolaires.

10. Procédé selon l'une quelconque des revendications 1 à 9, sachant que la phase secondaire polaire liquide est choisie parmi le groupe constitué d'eau, de solutions polymères aqueuses, de solutions de polysaccharide aqueuses et de polymères polaires fondus.

11. Procédé selon l'une quelconque des revendications 1 à 10, sachant que la phase primaire apolaire liquide est une cire fondue ou une huile de paraffine, et que la phase secondaire apolaire liquide est une solution de polysaccharide aqueuse ou un PEG.

12. Procédé selon l'une quelconque des revendications 1 à 4, sachant que les particules de matière solide du mélange de particules de matière solide au moins bimodal sont choisies parmi les polymères thermoplastiques se présentant sous forme de particules.

13. Procédé selon la revendication 12, sachant qu'un liquide polaire est utilisé en tant que phase primaire et qu'un liquide apolaire est utilisé en tant que phase secondaire.

14. Procédé selon l'une quelconque des revendications 1 à 13, sachant que, lors de l'étape de l'élimination, la phase primaire est éliminée dans un premier temps de la suspension selon une ampleur allant au moins jusqu'à 85 % par rapport au pourcentage en volume de la phase primaire liquide, sachant que l'élimination est effectuée, en fonction du matériau de phase primaire choisi, (i) par extraction capillaire, (ii) par extraction de solvant ou (iii) par séchage, et que l'élimination de la phase secondaire est effectuée immédiatement après.
